# EUROPEAN PATENT SPECIFICATION

(11) **EP 2 039 167 B1**
(45) Date of publication and mention of the grant of the patent: **27.10.2010**
(21) Application number: 07744746.4
(22) Date of filing: 30.05.2007
(51) Int. Cl.: H04N 7/26, H04N 7/24

(54) **VIDEO CODING APPARATUS AND VIDEO CODING METHOD**
VIDEOCODIERUNGSVORRICHTUNG UND VIDEOCODIERUNGSVERFAHREN
APPAREIL ET PROCÉDÉ DE CODAGE VIDÉO

(30) Priority: 27.06.2006 JP 2006176636
(43) Date of publication of application: 25.03.2009
(73) Proprietor: Canon Kabushiki Kaisha, Tokyo (JP)
(72) Inventor: NOZAWA, Shingo, Tokyo (JP)
(74) Representative: TBK-Patent
(86) International application number: PCT/JP2007/061400
(87) International publication number: WO 2008/001586

(56) References cited:
- EP-A- 1 422 828
- WO-A-2004/034330
- WO-A-2005/041420
- US-A1- 2006 280 371

## Description

### TECHNICAL FIELD

The present invention relates to a video coding apparatus and a video coding method and, in particular, to technologies suitably used for a recording and reproducing apparatus for storing and reproducing video data and an image capture apparatus.

### BACKGROUND ART

In the recent years, advance in digital signal processing technologies enables a large volume of digital informations, such as a moving image, a still image, audio and the like to undergo highly efficient coding and to be stored in a small storage media and to be transmitted through a communication media. Applying such technologies, developments are underway on a video coding apparatus which enables conversion of videos of television broadcasts and video cameras into a compressed data (bit stream). Among video coding methods of various types of moving images, H.264 (also known as MPEG4 Part 10/AVC) is attracting a lot of notice among others.

For H.264, arithmetic coding called Context-based Adaptive Binary Arithmetic Coding (hereinafter to be referred to as CABAC) and variable length coding called Context-based Adaptive Variable Length Coding (herein to be referred to as CAVLC) are adopted.

Focusing attention on the above described CABAC as well as CAVLC, JP-A-2004-135251 is proposed as a prior example. According to "an Image Information Coding Method and an Image Information Decoding Method" described in JP-A-2004-135251, the disclosed invention intends to attain ristrict the input and output data amount to CABAC and secure the process time of the decoder.

Specifically, the invention of JP-A-2004-135251 individually includes counters of the number of the binary data input to the CABAC coder and counters of the number of bit data to be outputted. And there disclosed is a configuration that in the case where any one of those counters happens to exceed a preset threshold value, a restraint monitor outputs a signal indicating that the coding data is invalid, to carry out the recoding process.

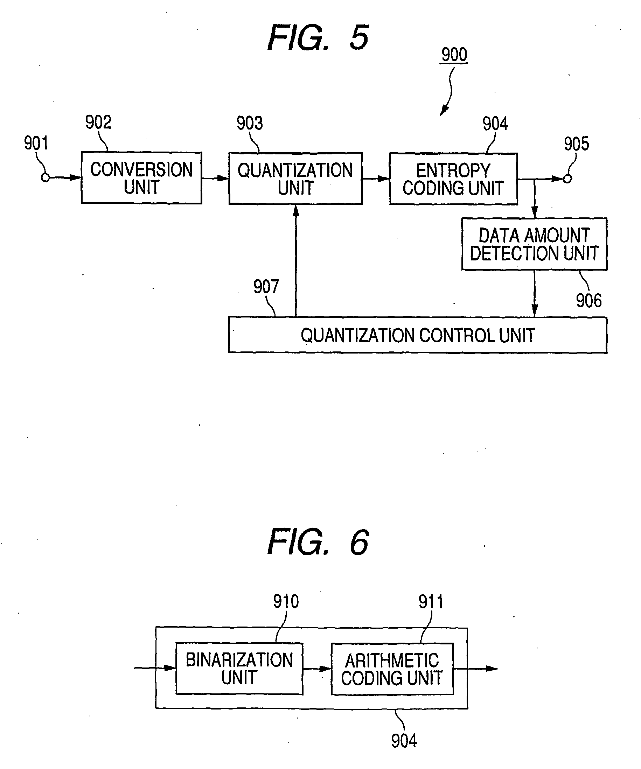

Fig. 5 is a block diagram illustrating a configuration example of a conventional video coding apparatus 900. Fig. 5 includes a video input unit 901, a conversion unit 902, a quantization unit 903, an entropy coding unit 904, a stream output unit 905, a data amount detection unit 906 and a quantization control unit 907.

The image data input from the video input unit 901 is divided into image blocks each including 16 pixels in each of the vertical and horizontal directions and converted into coefficient series on the unit basis of the image block by the conversion unit 902. The conversion unit 902 carries out orthogonal transform processing, movement prediction processing and the like to thereby reduce visual redundancy of the image block.

The coefficient series having undergone orthogonal transform in the conversion unit 902 are supplied to the quantization unit 903 and quantized by predetermined quantization parameters. In accordance with size of quantization parameters in the quantization unit 903, the information amount of the coefficient series is reduced and, in replacement thereof, coding deterioration occurs. The quantized coefficient series are supplied to the entropy coding unit 940.

The entropy coding unit 904 converts the input coefficient series into more efficient coding series based on the occurrence frequency of symbol configuring the coefficient series to carry out data compression processing. The coding series generated by entropy coding are outputted from the stream output unit 905 as a bit stream.

The data amount and the image quality in the bit stream enter trade-off relation in accordance with the quantization parameters in the quantization unit 903. Accordingly, determination on the quantization parameters significantly affects the performance of the video coding apparatus.

In addition, that determination must be implemented appropriately so that the data amount of the generated bit stream fulfills the buffer model at decoding. The buffer model is specified in the ISO/IEC13818-2 standards and ITU-TH.264 standards. The conventional apparatus carries out controls as follows.

The data amount detection unit 906 detects the data amount outputted from the entropy coding unit 904 to supply the quantization control unit 907 with a detected value. The quantization control unit 907 integrates the generated data amount of each coded picture so far and calculates the target code amount of the picture to be coded subsequently is calculated so that the buffer model is fulfilled.

And while the generated code amount of each image block configuring the picture is monitored, the quantization parameters are sequentially determined to be supplied to the quantization unit 903 so that the code amount generated from the picture to be coded approaches the target code amount. That is, it is a stream of processing that, each time a single picture undergoes coding, the data amount generated from the picture is detected and the detection outcome thereof gets fed back to be used for coding the subsequent picture.

However, use of a binarization arithmetic coding method (CABAC) in the recently notice-attracting video coding method "H.264" as the entropy coding unit 904 causes such a process to be extremely difficult.

In the case of adopting the "CABAC" in H.264, the entropy coding unit 904 in Fig. 5 is indicated as the entropy coding unit 904 as illustrated in Fig. 6. The entropy coding unit 904 will be configured by the binarization unit 910 and the arithmetic coding unit 911. The binarization unit 910 converts coefficient series supplied by the quantization unit 903 into binary symbols "0" and "1". The binary symbol series are supplied to the arithmetic coding unit 911 one by one and are converted into arithmetic code series to thereby undergo data compression.

At that occasion, the arithmetic coding unit 911 carries out processing on one binary symbol basis and therefore will require extremely more process cycles than a conventional entropy coding unit does. The reason thereof is that the conventional entropy coding carries out processing on the unit basis of a coefficient supplied from the quantization unit 903 and, in contrast for the CABAC, one of the coefficients thereof corresponds to a plurality of units of binary symbols. Therefore, processing cycles of several times to 10 times in the worst case more than those for the conventional cases are required.

Thus, processing cycles of the arithmetic coding unit 911 occasionally gets extremely long. Therefore, entropy coding unit processing time for one picture gets extremely long. Consequently, as described above, detecting and feeding back the amount of the data resulted in from entropy coding on the unit basis of one picture as described above becomes hardly realizable.

There considered is a configuration of a coding apparatus for solving that problem by increasing process speed with a circuit configuration using a higher processing clock. However, such a configuration will have to sacrifice circuit size and electricity consumption, giving rise to a problem.

In addition, there also considered is a coding apparatus for solving the problem with variable length coding CAVLC being a coding method equivalent to conventional entropy coding. However, the CAVLC is lower than the CABAC in coding efficiency and gives rise to such a problem to spoil the image quality. Accordingly, even the invention of "an Image Information Coding Method and Image Information Decoding Method" proposed in the above described JP- A-2004-135251 can not solve such a problem as described above.

Another conventional technique in the relevant technical field is known from the document WO 2004/034330 A1, which discloses a video-information encoding apparatus and decoding apparatus with a guarantee of a fixed processing time. By limiting the amount of data to be input into/output from a CABAC encoding unit and decoding unit on a unit-of-encoding basis, such as one picture, slice, macroblock or block, and by encoding uncompressed video data, it is possible to provide a video-information encoding apparatus and decoding apparatus with a guarantee of a fixed processing time.

Another conventional technique in the relevant technical field is known from WO 2005/041420 A1, which discloses that, in a binarized arithmetic sign decoder, the arithmetic sign decoding and the debinarization are separated from each other and a large intermediate buffer is inserted therebetween. The arithmetic sign decoding is executed when a stream is inputted. In this way, the arithmetic sign only needs to be decoded at the maximum input bit rate of the decoder. The obtained binarized symbol sequence is temporarily stored in the intermediate buffer. Then, the debinarization of the binarized symbol sequence into multilevel symbols is performed in accordance with the processing of a block decoder in the following stage.

Also, the above-mentioned two conventional techniques are not capable of solving such problems as described above.

### DISCLOSURE OF THE INVENTION

In view of the above described problems, an object of the present invention is to enable provision of a video coding apparatus that can enhance coding efficiency without increasing the circuit size and electricity consumption to an excess extent and can generate a bit stream appropriately fulfilling a buffer model and to enable provision of a video coding method.

According to an aspect of the present invention, this object may be achieved by a video coding apparatus as defined in independent claim 1.

According to an aspect of the present invention, this object may be achieved by a video coding method as defined in independent claim 7.

According to an aspect of the present invention, this object may be achieved by a storage medium storing a program as defined in independent claim 13.

Further developments and/or modifications of aspects of the present invention are defined in respective dependent claims.

Further features and aspects of the present invention will become apparent from the following detailed description of exemplary embodiments with reference to the attached drawings.

### BRIEF DESCRIPTION OF THE DRAWINGS

Fig. 1 is a block diagram showing an exemplary configuration of a video coding apparatus according to an aspect of an exemplary embodiment of the present invention.
Fig. 2 is a flow chart describing an exemplary process procedure of a quantization control unit according to an aspect of an exemplary embodiment of the present invention.
Fig. 3 is a diagram showing development of generated data amount according to an aspect of an exemplary embodiment of the present invention.
Fig. 4 is a diagram showing development of a decoder buffer model according to an aspect of an exemplary embodiment of the present invention.
Fig. 5 is a block diagram showing an exemplary configuration of a conventional video coding apparatus.
Fig. 6 is a block diagram showing an exemplary configuration of an entropy coding unit according to H.264.

### BEST MODE FOR CARRYING OUT THE INVENTION

Numerous embodiments, features and aspects of the present invention will be described with reference to the drawings.

### First Exemplary Embodiment

Exemplary embodiments of the present invention will be described with reference to the drawings below.

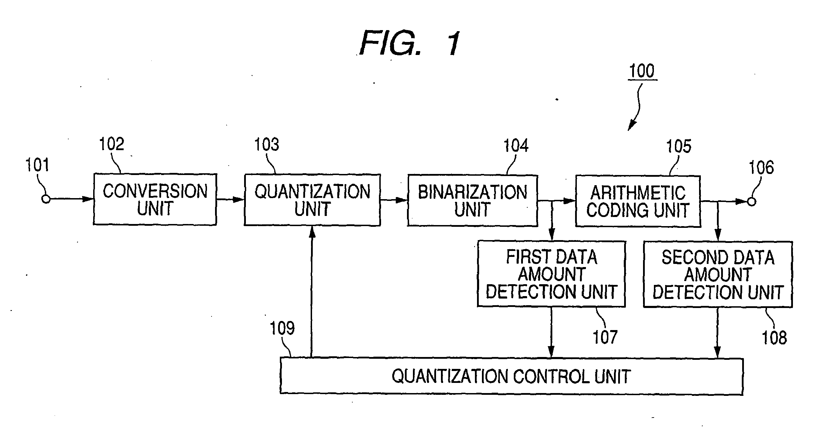

Fig. 1 is a block diagram showing an exemplary configuration of a video coding apparatus 100 according to an aspect of an exemplary embodiment of the present invention. Fig. 1 includes a video input unit 101, a conversion unit 102, a quantization unit 103, a binarization unit 104, an arithmetic coding unit 105, a stream output unit 106, a first data amount detection unit 107, a second data amount detection unit 108 and a quantization control unit 109.

A video coding apparatus 100 in the present exemplary embodiment carries out highly efficient coding processing in the following procedure based on the H.264 (AVC) specification. The video data input from the video input unit 101 is divided into image blocks each including 16 pixels in each of the vertical and horizontal directions, by the conversion unit 102 and is converted into coefficient series on the unit basis of an image block. The conversion unit 102 carries out the orthogonal transform processing and the moving prediction processing (intra-prediction and inter-prediction) to thereby reduce visual redundancy on information amount in the image block.

The coefficient series having undergone orthogonal transform in the conversion unit 102 are supplied to the quantization unit 103. The quantization unit 103 quantizes the input coefficient series with the quantization parameters supplied from the quantization control unit 109.

In accordance with size of quantization parameters in the quantization unit 103, the information amount of the coefficient series is reduced and, in replacement thereof, coding deterioration occurs. The quantized coefficient series are supplied to the binarization unit 104.

The binarization unit 104 converts the respective coefficients in the input coefficient series into the binary symbol of "0" and "1". The binary symbol series including a plurality of binary symbols are supplied to the arithmetic coding unit 105 and are converted into arithmetic code series and subjected to data compression.

At that occasion, the binarization unit 104 can convert one to one respective coefficients to the binary symbol series in accordance with the table. Therefore the processing here can be executed "on the coefficient basis".

On the other hand, the arithmetic coding unit 105 needs to bring the binary symbol one by one into processing ("on the binary symbol basis"). The code series generated by arithmetic coding are outputted from the stream output unit 106 as a bit stream.

The data amount and the image quality in the bit stream enter trade-off relation in accordance with the quantization parameters in the quantization unit 103. Accordingly, processing of the quantization control unit 109 determining the quantization parameters significantly affects the performance of the present video coding apparatus.

Moreover, that determination must be controlled appropriately so that the data amount of the generated bit stream fulfills the predetermined buffer model at decoding. Therefore, the quantization control unit 109 in the present video coding apparatus determines the quantization parameters with both of the first data amount detection unit 107 and the second data amount detection unit 108 and supplies the quantization unit 103 with the determined quantization parameters and thereby controls quantization.

At first, the first data amount detection unit 107 detects the data amount outputted from the binarization unit 104, that is, the data amount of the binary symbol series and supplies the quantization control unit 109 with the detection value (first detection value). The data amount of the binary symbol series is detected on the coefficient basis in correspondence with processing of the binarization unit 104. The quantization control unit 109 integrates the data amount of the binary symbol series generated on the unit basis of picture coded so far and calculates the data amount of the binary symbol series to provide the target value of the picture to be coded subsequently so that the buffer model is fulfilled.

And while the quantization control unit 109 monitors the generated code amount on the unit basis of the image block configuring the picture, the quantization parameters are sequentially determined to supply the quantization unit 103 with the quantization parameters so that the data amount of the binary symbol series generated from the picture to be coded approaches the target value.

At that occasion, the detection value used for quantization control, that is, the data amount of the binary symbol series indicates the data amount in the middle stage of entropy coding. Therefore, the value around several ten percent more than the finally generated data amount will be indicated. That is, the data amount of the bit stream finishing up to the arithmetic coding of the subsequent stage will be less than the detection value and the target value in the state of the binary symbol series. However, from the point of view of fulfilling a buffer model, it is comprehensible that the too large amount of data will exceed the buffer capacity to result in wreckage and, however, in the case of the smaller amount, is appropriate for the buffer model.

In addition, processing of the quantization control unit 109 is carried out in accordance with the output of the first data amount detection unit 107, updated on the coefficient basis. Therefore, the process cycle can be proceeded on the coefficient basis. Consequently, while adopting high-performance coding system, data amount can be controlled smoothly likewise a conventional system, in synchronization with the unit of picture, the image block or the slice including the image block set.

Incidentally, as described above, controlling the data amount generated in accordance with the binary symbol series, only data in the amount less than the generated data amount assumed by the buffer model is generated. Therefore, although the buffer model is not devastated, there still remains a room to be devised in the point of view of coding efficiency.

Therefore, using the second data amount detection unit 108 in the video coding apparatus 100 in the following description, the data amount is estimated accurately to realize coding with good efficiency. The processing procedure thereof will be described below.

The above described quantization control unit 109 obtains the second detection value from the second data amount detection unit 108 together with the first detection value obtained from the first data amount detection unit 107. The above described second detection value is updated on the binary symbol basis. In the video coding apparatus 100, one coefficient becomes extremely long binary symbol series or extremely short binary symbol series. Therefore, the relation between the coefficient and the detection amount of the generated data amount is not one for one. Therefore, the relation will be out of synchronization with the unit of coding processing such as picture, image block and slice.

In the present exemplary configuration of the present embodiment, the quantization control unit 109 determines the target value as well as the quantization parameter of the provisional data amount by using the first detection value outputted from the first data amount detection unit 107 as described above. Moreover, the quantization control unit 109 calculates the generated data amount corresponding to the picture on the basis of the second detection value outputted from the second data amount detection unit 108 in order to controls the data amount in synchronization with picture, image block and slice. In accordance with information on the generated data amount corresponding to the picture, the quantization control unit 109 corrects the generated data amount asynchronously while updating the successive quantization parameters.

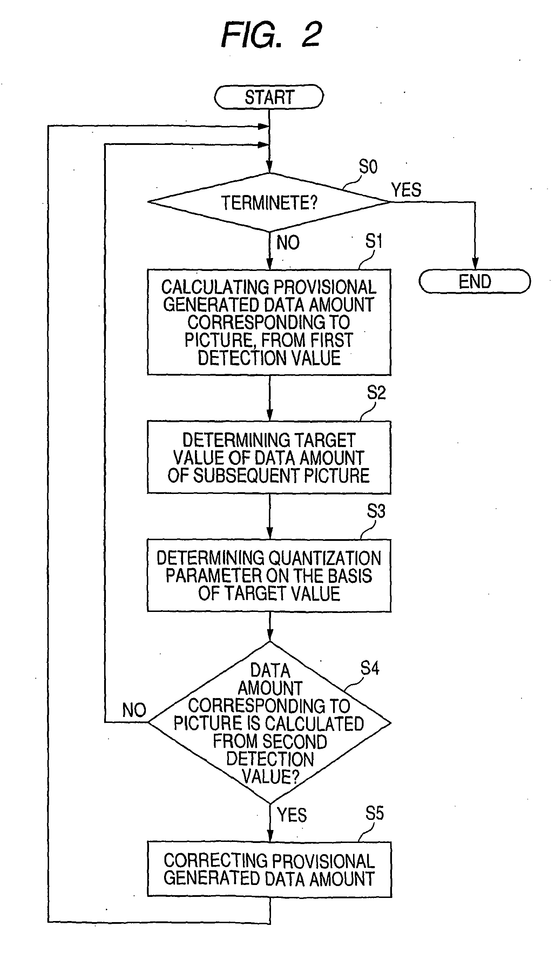

Fig. 2 is a flow chart describing an exemplary process procedure of a quantization control unit 109 according to an aspect of the present exemplary embodiment.

The step S0 determines whether or not the process is finalized. When the process comes to an end (YES in the step S0), the present flow comes to an end. On the other hand, when the process does not come to an end (NO in the step S0), the step goes forward to the step S1.

In the step S1, the quantization control unit 109 calculates the provisional generated data amount of the pictures so far (provisional generated data amount) on the basis of the consequence of integrating the first detection value from the first data amount detection unit 107.

In the step S2, the quantization control unit 109 determines the target value of the data amount of the subsequent picture on the basis of the provisional generated data amount on the pictures calculated so far in the step S1.

In the step S3, the quantization control unit 109 sequentially determines quantization parameters of each image block within the picture on the basis of the target value of the subsequent picture determined in the step S2.

In the step S4, the quantization control unit 109 obtains the second detection value from the above described second data amount detection unit 108 and determines whether or not the generated data amount corresponding to the picture is calculated.

If the determination in the step S4 results in that the amount occasionally has not yet reached the amount corresponding to the picture(NO in the step S4), then the step returns to the step S0. In addition, in the case where the amount has reached the amount corresponding to the picture (YES in the step S4), the step goes forward to the step S5.

In the step S5, the generated data amount corresponding to the picture, calculated based on the above described second detection value, and the above described provisional generated data amount are brought into comparison on mutually corresponding pictures and thereby the above described provisional generated data amount is corrected. That is, the target value and the quantization parameters, based on the provisional generated data amount, are updated into the more appropriate value to adjust the generated data amount. Thereafter, the step returns to the step S0 so that the present flow continues to be repeated until the finalization conditions are fulfilled.

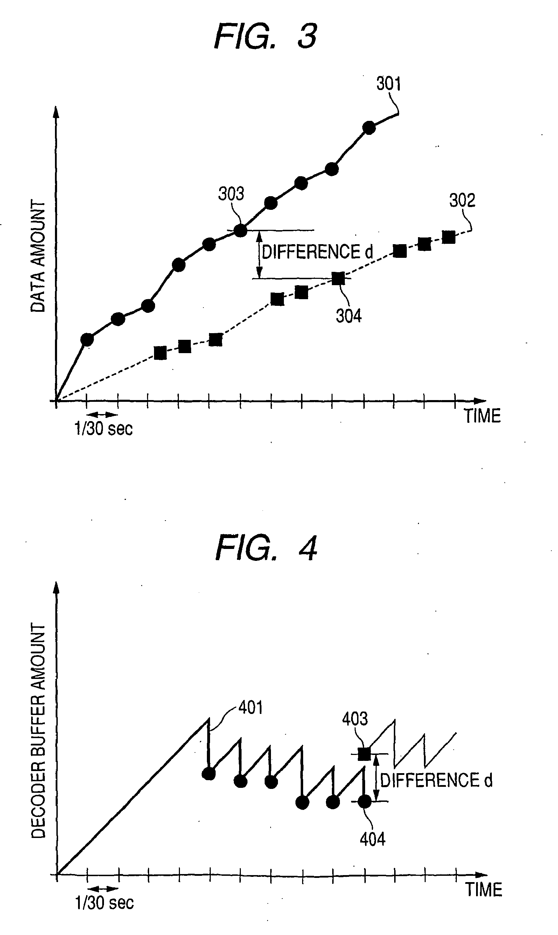

Fig. 3 is a characteristic diagram showing development of generated data amount according to an aspect of the present exemplary embodiment. The trace 301 represents development of the generated data amount (the integrated value of the provisional picture data amount) based on the first detection value. In Fig. 3, the marker indicates the time when the picture data amount is calculated. As apparent from Fig. 3, calculation of the data amount from the first detection value is apparently updated in a predetermined interval (for example, a frame cycle) such as 1/30 second.

On the other hand, the development of the generated data amount based on the second detection value indicated in the trace 302 indicates that the process in the arithmetic coding unit 105 is out of synchronization with the pixel number and therefore the data amount of the picture is calculated in a fluctuating time interval. In Fig. 3, the marker 303 indicates the generated data amount derived by the first detection value and the marker 304 is the generated data amount derived by the second detection value. The both of them indicate the integrated value at the point of time corresponding to coding of the sixth picture from the beginning. That difference d of the integrated amount is calculated and the difference d is subtracted from the provisional generated data amount as correction indicated in the step S5 in the above described flow chart.

In the state prior to correction, the provisional generated data amount is calculated to be more than the correct generated data amount. Therefore, buffer control is strictly controlled than the original. The data amount which is always smaller than the amount allowed as the specification is generated to enable no sufficient execution of the image quality performance. However, as described above, every time when the difference d is defined, the detection amount of the data amount is corrected to the correct value. Thereby more preferable image quality performance with the appropriate buffer control can be realized.

Fig. 4 is a characteristic diagram showing development of a decoder buffer model according to an aspect of the present exemplary embodiment. In Fig. 4, the trace 401 represents development of the buffer amount controlled on the provisional generated data amount and indicates the state where the picture data amount extracted from the buffer at an interval of 1/30 second is so large and therefore the remaining amount in the buffer is always too small to unable the buffer to function to a full extent.

Here, at the time point of the marker 404 corresponding to the sixth picture, for example, based on the above described difference d, the decoder buffer amount shifts to the state of the marker 403 to enable control in such a manner as to take advantage of the sufficient buffer remaining amount. Thus, while controlling the buffer model at a provisional generated data amount, it is possible to implement correction so as to follow it to carry out a preferable control. Here, in the description of the present embodiment, an example of carrying out correction with the difference between the first detection value and the second detection value is described. However, correction based on proportion can give to rise a likewise effect, falling within the aspect of the present invention.

With such a configuration, while the provisional generated data amount is being estimated in accordance with an output of the binarization unit of a short processing cycle to carry out quantization control sequentially, the correct generated data amount is detected from the output of the arithmetic coding unit so as to follow the quantization control, to correct the estimated amount appropriately. Consequently, without increasing the circuit size and the electricity consumption, a bit stream fulfilling the buffer model appropriately can be generated. Other exemplary embodiments According to an Aspect of the Present Invention

The respective units configuring the video coding apparatus in the exemplary embodiment of the present invention described above and the respective steps of the video coding method can be realized by the programs stored in the RAM, the ROM and the like of a computer to operate. The computer readable storage media that has stored those programs as well as the above described program is included in the present invention.

In addition, the present invention is applicable to an embodiment in the form selected from a system, an apparatus, a method, a program or a storage media and the like and specifically may be applied to a system configured by a plurality of apparatuses or may be applied to an apparatus including one apparatus.

Here, the present invention supplies the system or the apparatus directly or remotely with the program of the software for realizing the function of the embodiment (the program corresponding with the flow chart illustrated in Fig. 2 in the embodiment). And there included is the case where the present invention is achieved by a computer of the system or the apparatus to read the above described supplied program code and to execute it.

Accordingly, in order to realize the function processing of the present invention with a computer, the program code itself installed in the above described computer is also for realizing the present invention. That is, the present invention includes the computer program itself for realizing the function processing of the present invention.

In that case, if the function of the program is present, the modes such as an object code, a program executed by an interpreter and a script data supplied to the OS are also preferable.

The storage media for supplying the program is, for example, a floppy (registered trade name) disk, a hard disk, an optical disk, a magnet-optical disk, an MO, a CD-ROM, a CD-R, a CD-RW and the like. In addition, there are a magnetic tape, a nonvolatile memory card, a ROM, a DVD (DVD-ROM, DVD-R) and the like.

Otherwise, as a method, the program can be supplied by connection to a home page on the Internet with a browser of a client computer and also by downloading the computer program of the present invention itself from the above described website or the file compressed and containing an automatic install function to the storage media such as a hard disk.

In addition, the program is realizable as well by dividing the program code configuring the program of the present invention into a plurality of files and downloading the respective files from different websites. That is, a WWW server of allowing a plurality of users to download the program files for realizing the function processing of the present invention with a computer is also included in the present invention.

In addition, the program of the present invention is coded and stored in a storage media such as a CD-ROM to be distributed to a user and a user who cleared the predetermined conditions are allowed to download the key information for decoding the coding from the website through the Internet. And it is also possible to use the downloaded key information to thereby carry out the coded program and to cause a computer to install the program to realize it.

In addition, a computer executes the read program and thereby the functions of the embodiment described above are realized. Otherwise, based on the instruction of that program, the OS and the like in operation on a computer execute a part or the whole of the actual processing and thereby the functions of the embodiment described above can be realized.

Moreover, the program read from a storage media is written in a memory provided in a function expanding board inserted into a computer or a function expanding unit brought into connection to a computer. Otherwise, based on the instruction of that program, a CPU and the like provided in its function expanding board or function expanding unit execute a part or the whole of the actual processing and thereby the functions of the embodiment described above are realized.

While the present invention has been described with reference to the exemplary embodiments, it is to be understood that the invention is not limited to the disclosed exemplary embodiments. The scope of the following claims is to be accorded the broadcast interpretation so as to encompass all such modifications and equivalent structures and functions.

## Claims

1. A video coding apparatus (100), comprising:
a quantization unit (103) configured to quantize input video data;
a binarization unit (104) configured to convert video data quantized by the quantization unit into binary symbol series and output the binary symbol series of each picture at a predetermined period;
an arithmetic coding unit (105) configured to subject the binary symbol series converted by the binarization unit to arithmetic coding so that processing time of the arithmetic coding varies depending on each picture;
a first data amount detection unit (107) configured to detect a data amount of the binary symbol series output from the binarization unit for each picture as a first detection value;
a second data amount detection unit (108) configured to detect a data amount of a coded data output from the arithmetic coding unit for each picture; and a quantization control unit (109) configured to, at the time when the first data amount detection unit detects the first detection value with respect to a certain picture, estimate a target data amount of a picture succeeding to the certain picture on the basis of the first detection value and determine a quantization parameter for controlling quantization of the picture succeeding to the certain picture in accordance with the estimated target
data amount, and to, at the time when the second data amount detection unit detects the second detection value with respect to the certain picture, update the quantization parameter in accordance with the second detection value.

2. The video coding apparatus according to claim 1, wherein the quantization control unit (109) determines the quantization parameter for an image block within the picture on the basis of the target data amount.

3. The video coding apparatus according to claim 2, wherein the quantization control unit (109) changes, based on the second detection value, the quantization parameter of each of the image block, determined based on the target data amount.

4. The video coding apparatus according to claim 1, wherein the quantization control unit (109) adjusts the actual generated data amount so as to be increased, on the basis of the second detection value.

5. The video coding apparatus according to claim 1, wherein the quantization control unit (109) calculates integration of the first detection value supplied from the first data amount detection unit as a provisional generated data amount and implements controlling so that the relevant provisional generated data amount fulfills a predetermined buffer model related to decoding.

6. The video coding apparatus according to claim 5, wherein the quantization control unit (109) calculates the target data amount corresponding to a picture on the basis of the second detection value supplied from the second data amount detection unit and corrects the provisional output data amount on the basis of information of the calculated target data amount corresponding to a picture at a predetermined
cycle within a range of fulfilling the buffer model.

7. A video coding method comprising the steps of:
quantizing input video data;
converting the quantized video data into binary symbol series and outputting the binary symbol series of each picture at a predetermined period;
subjecting the binary symbol series to arithmetic coding so that processing time of the arithmetic coding varies depending on each picture;
detecting a data amount of the binary symbol series output in the binarization converting step for each picture as a first detection value;
detecting a data amount of a coded data output in the arithmetic coding step for each picture as a second detection value; and
controlling to, at the time when the first data amount detection step detects the first detection value with respect to a certain picture, estimate a target data amount of a picture succeeding to the certain picture on the basis of the first detection value and determine a quantization parameter for controlling quantization of the picture succeeding to the certain picture in accordance with the estimated target data amount, and to, at the time when the second data amount detection step detects the second detection value with respect to the certain picture, update the quantization parameter in accordance with the second detection value.

8. The video coding method according to claim 7, wherein the controlling step includes determining the quantization parameter for an image block within the picture on the basis of the target data amount.

9. The video coding method according to claim 8, wherein the controlling step includes changing, based on the second detection value, the quantization parameter of each of the image block determined based on the target data amount.

10. The video coding method according to claim 7, wherein the quantization controlling includes adjusting the actual generated data amount so as to be increased on the basis of the second detection value.

11. The video coding method according to claim 7, wherein the controlling step includes calculating integration of the first detection value output in the detecting step of the amount of the data output in binarization converting step, as a provisional generated data amount and implementing controlling so that the relevant provisional generated data amount fulfills a predetermined buffer model related to decoding.

12. The video coding method according to claim 11, wherein the controlling step includes calculating the target data amount corresponding to a picture on the basis of the second detection value output in the second data amount detecting step of the amount of the data output in the arithmetic coding subjecting step and correcting the provisional output data amount on the basis of information of the calculated target data amount corresponding to a picture at a predetermined cycle within a range of fulfilling the buffer model.

13. A storage medium storing a program for causing a computer to execute a video coding method, the video coding method comprising the steps of:
quantizing input video data;
converting the quantized video data into binary symbol series and outputting the binary symbol series of each picture at a predetermined period;
subjecting the binary symbol series to arithmetic coding so that processing time of the arithmetic coding varies depending on each picture;
detecting a data amount of the binary symbol series output in the binarization converting step for each picture as a first detection value;
detecting a data amount of a coded data output in the arithmetic coding step for each picture as a second detection value; and
controlling to, at the time when the first data amount detection step detects the first detection value with respect to a certain picture, estimate a target data amount of a picture succeeding to the certain picture on the basis of the first detection value and determine a quantization parameter for controlling quantization of the picture succeeding to the certain picture in accordance with the estimated target data amount, and to, at the time when the second data amount detection step detects the second detection value with respect to the certain picture, update the quantization parameter in accordance with the second detection value.

## Patentansprüche

1. Videokodierungsvorrichtung (100), mit:
einer Quantisierungseinrichtung (103), die dazu eingerichtet ist, um eingegebene Videodaten zu quantisieren;
einer Binarisierungseinrichtung (104), die dazu eingerichtet ist, um Videodaten, die durch die Quantisierungseinrichtung quantisiert sind, in Folgen von Binärsymbolen umzuwandeln, und um die Folgen von Binärsymbolen jedes Bildes in einem vorbestimmten Zeitabschnitt auszugeben;
einer arithmetischen Kodierungseinrichtung (105), die dazu eingerichtet ist, um die Folgen von Binärsymbolen, die durch die Binarisierungseinrichtung umgewandelt sind, einer arithmetischen Kodierung so zu unterziehen, dass die Verarbeitungszeit der arithmetischen Kodierung in Abhängigkeit von jedem Bild variiert;
einer ersten Datenmengenerfassungseinrichtung (107), die dazu eingerichtet ist, um eine Datenmenge der Folgen von Binärsymbolen, die von der Binarisierungseinrichtung für jedes Bild ausgegebenen sind, als einen ersten Erfassungswert zu erfassen;
einer zweiten Datenmengenerfassungseinrichtung (108), die dazu eingerichtet ist, um eine Datenmenge von kodierten Daten, die von der arithmetischen Kodierungseinrichtung für jedes Bild ausgegebenen sind, als einen zweiten Erfassungswert zu erfassen; und
einer Quantisierungssteuerungseinrichtung (109), die dazu eingerichtet ist, um zu dem Zeitpunkt, zu dem die erste Datenmengenerfassungseinrichtung den ersten Erfassungswert hinsichtlich eines gewissen Bildes erfasst, eine Soll-Datenmenge eines dem gewissen Bild nachfolgenden Bildes auf der Grundlage des ersten Erfassungswertes zu schätzen und um einen Quantisierungsparameter zur Steuerung der Quantisierung des dem gewissen Bild nachfolgenden Bildes gemäß der geschätzten Soll-Datenmenge zu bestimmen, und um zu dem Zeitpunkt, zu dem die zweite Datenmengenerfassungseinrichtung den zweiten Erfassungswert hinsichtlich des gewissen Bildes erfasst, den Quantisierungsparameter gemäß dem zweiten Erfassungswert zu aktualisieren.

2. Videokodierungsvorrichtung gemäß Anspruch 1, wobei die Quantisierungssteuerungseinrichtung (109) den Quantisierungsparameter für einen Bildblock innerhalb des Bildes auf der Grundlage der Soll-Datenmenge bestimmt.

3. Videokodierungsvorrichtung gemäß Anspruch 2, wobei die Quantisierungssteuerungseinrichtung (109) den Quantisierungsparameter von jedem Bildblock, der basierend auf der Soll-Datenmenge bestimmt ist, basierend auf dem zweiten Erfassungswert ändert.

4. Videokodierungsvorrichtung gemäß Anspruch 1, wobei die Quantisierungssteuerungseinrichtung (109) die tatsächlich erzeugte Datenmenge auf der Grundlage des zweiten Erfassungswertes so anpasst, dass sie erhöht wird.

5. Videokodierungsvorrichtung gemäß Anspruch 1, wobei die Quantisierungssteuerungseinrichtung (109) eine Integration des ersten Erfassungswertes, der von der ersten Datenmengenerfassungseinrichtung zugeführt wird, als eine vorläufig erzeugte Datenmenge berechnet und eine Steuerung so implementiert, dass die relevante vorläufig erzeugte Datenmenge einem vorbestimmten Puffermodell bezüglich der Dekodierung genügt.

6. Videokodierungsvorrichtung gemäß Anspruch 5, wobei die Quantisierungssteuerungseinrichtung (109) die Soll-Datenmenge, die einem Bild entspricht, auf der Grundlage des zweiten Erfassungswertes, der von der zweiten Datenmengenerfassungseinrichtung zugeführt wird, berechnet und die vorläufig ausgegebene Datenmenge auf der Grundlage von Informationen der berechneten Soll-Datenmenge, die einem Bild entspricht, in einem vorbestimmten Zyklus innerhalb eines dem Puffermodell genügenden Bereiches korrigiert.

7. Videokodierungsverfahren mit den Schritten:
Quantisieren eingegebener Videodaten;
Umwandeln der quantisierten Videodaten in Folgen von Binärsymbolen und Ausgeben der Folgen von Binärsymbolen jedes Bildes in einem vorbestimmten Zeitabschnitt;
Unterziehen der Folgen von Binärsymbolen einem arithmetischen Kodieren, so dass die Verarbeitungszeit des arithmetischen Kodierens in Abhängigkeit von jedem Bild variiert;
Erfassen einer Datenmenge der Folgen von Binärsymbolen, die in dem Binarisierungs-Umwandlungsschritt für jedes Bild ausgegeben werden, als einen ersten Erfassungswert;
Erfassen einer Datenmenge von kodierten Daten, die in dem arithmetischen Kodierungsschritt für jedes Bild ausgegeben werden, als einen zweiten Erfassungswert; und
Steuern, um zu dem Zeitpunkt, zu dem der erste Datenmengenerfassungsschritt den ersten Erfassungswert hinsichtlich eines gewissen Bildes erfasst, eine Soll-Datenmenge eines dem gewissen Bild nachfolgenden Bildes auf der Grundlage des ersten Erfassungswertes zu schätzen und um einen Quantisierungsparameter zum Steuern der Quantisierung des dem gewissen Bild nachfolgenden Bildes gemäß der geschätzten Soll-Datenmenge zu bestimmen, und um zu dem Zeitpunkt, zu dem der zweite Datenmengenerfassungsschritt den zweiten Erfassungswert hinsichtlich des gewissen Bildes erfasst, den Quantisierungsparameter gemäß dem zweiten Erfassungswert zu aktualisieren.

8. Videokodierungsverfahren gemäß Anspruch 7, wobei der Steuerschritt ein Bestimmen des Quantisierungsparameters für einen Bildblock innerhalb des Bildes auf der Grundlage der Soll-Datenmenge umfasst.

9. Videokodierungsverfahren gemäß Anspruch 8, wobei der Steuerschritt, basierend auf dem zweiten Erfassungswert, ein Ändern des Quantisierungsparameters von jedem Bildblock umfasst, der basierend auf der Soll-Datenmenge bestimmt ist.

10. Videokodierungsverfahren gemäß Anspruch 7, wobei das Steuern der Quantisierung auf der Grundlage des zweiten Erfassungswertes ein Anpassen der tatsächlich erzeugten Datenmenge so umfasst, dass sie erhöht wird.

11. Videokodierungsverfahren gemäß Anspruch 7, wobei der Steuerschritt ein Berechnen einer Integration des ersten Erfassungswertes, der in dem Erfassungsschritt der Menge der Daten ausgegeben wird, die in dem Binarisierungs-Umwandlungsschritt ausgegebenen werden, als eine vorläufig erzeugte Datenmenge und ein Implementieren eines Steuern so umfasst, dass die relevante vorläufig erzeugte Datenmenge einem vorbestimmten Puffermodell bezüglich des Dekodierens genügt.

12. Videokodierungsverfahren gemäß Anspruch 11, wobei der Steuerschritt ein Berechnen der Soll-Datenmenge, die einem Bild entspricht, auf der Grundlage des zweiten Erfassungswertes, der in dem zweiten Datenmengenerfassungsschritt der Menge der Daten ausgegeben wird, die in dem Schritt des Unterziehens einer arithmetischen Kodierung ausgegebenen werden und ein Korrigieren der vorläufig ausgegebenen Datenmenge auf der Grundlage von Informationen der berechneten Soll-Datenmenge, die einem Bild entspricht, in einem vorbestimmten Zyklus innerhalb eines dem Puffermodell genügenden Bereiches umfasst.

13. Speichermedium, das ein Programm speichert, um einen Computer zu veranlassen, ein Videokodierungsverfahren auszuführen, wobei das Videokodierungsverfahren die Schritte aufweist:
Quantisieren eingegebener Videodaten;
Umwandeln der quantisierten Videodaten in Folgen von Binärsymbolen und Ausgeben der Folgen von Binärsymbolen jedes Bildes in einem vorbestimmten Zeitabschnitt;
Unterziehen der Folgen von Binärsymbolen einem arithmetischen Kodieren, so dass die Verarbeitungszeit des arithmetischen Kodierens in Abhängigkeit von jedem Bild variiert;
Erfassen einer Datenmenge der Folgen von Binärsymbolen, die in dem Binarisierungs-Umwandlungsschritt für jedes Bild ausgegeben werden, als einen ersten Erfassungswert;
Erfassen einer Datenmenge von kodierten Daten, die in dem arithmetischen Kodierungsschritt für jedes Bild ausgegeben werden, als einen zweiten Erfassungswert; und
Steuern, um zu dem Zeitpunkt, zu dem der erste Datenmengenerfassungsschritt den ersten Erfassungswert hinsichtlich eines gewissen Bildes erfasst, eine Soll-Datenmenge eines dem gewissen Bild nachfolgenden Bildes auf der Grundlage des ersten Erfassungswertes zu schätzen und um einen Quantisierungsparameter zum Steuern der Quantisierung des dem gewissen Bild nachfolgenden Bildes gemäß der geschätzten Soll-Datenmenge zu bestimmen, und um zu dem Zeitpunkt, zu dem der zweite Datenmengenerfassungsschritt den zweiten Erfassungswert hinsichtlich des gewissen Bildes erfasst, den Quantisierungsparameter gemäß dem zweiten Erfassungswert zu aktualisieren.

## Revendications

1. Dispositif (100) de codage de vidéo, comprenant :
une unité (103) de quantification constituée pour quantifier des données vidéo d'entrée ;
une unité (104) de binarisation constituée pour convertir les données vidéo quantifiées par l'unité de quantification en séries de symboles binaires et pour sortir les séries de symboles binaires de chaque image à une période prédéterminée ;
une unité (105) de codage arithmétique constituée pour soumettre les séries de symboles binaires converties par l'unité de binarisation à un codage arithmétique de sorte que le temps de traitement du codage arithmétique varie en fonction de chaque image ;
une première unité (107) de détection de quantité de données constituée pour détecter, en tant que première valeur de détection, la quantité de données des séries de symboles binaires sorties de l'unité de binarisation pour chaque image ;
une seconde unité (108) de détection de quantité de données constituée pour détecter la quantité de données des données codées sorties de l'unité de codage arithmétique pour chaque image comme une seconde valeur de détection; et
une unité (109) de commande de quantification constituée pour, au moment où la première unité de détection de quantité de données détecte la première valeur de détection en ce qui concerne une certaine image, estimer une quantité de données cible d'une image qui suit la certaine image sur la base de la première valeur de détection et pour déterminer un paramètre de quantification destiné à commander la quantification de l'image qui suit la certaine image en fonction de la quantité de données cible estimée, et pour, au moment où la seconde unité de détection de quantité de données détecte la seconde valeur de détection en ce qui concerne la certaine image, mettre à jour le paramètre de quantification en fonction de la seconde valeur de détection.

2. Dispositif de codage de vidéo selon la revendication 1, dans lequel l'unité (109) de commande de quantification détermine le paramètre de quantification pour un bloc d'image à l'intérieur de l'image sur la base de la quantité de données cible.

3. Dispositif de codage de vidéo selon la revendication 2, dans lequel l'unité (109) de commande de quantification change, en se basant sur la seconde valeur de détection, le paramètre de quantification de chaque bloc d'image, déterminé en se basant sur la quantité de données cible.

4. Dispositif de codage de vidéo selon la revendication 1, dans lequel l'unité (109) de commande de quantification ajuste, sur la base de la seconde valeur de détection, la quantité de données réelle engendrée de façon à l'augmenter.

5. Dispositif de codage de vidéo selon la revendication 1, dans lequel l'unité (109) de commande de quantification calcule l'intégration de la première valeur de détection fournie par la première unité de détection de quantité de données en tant que quantité provisoire de données engendrées et met en oeuvre la commande de façon que la quantité provisoire de données engendrées pertinente satisfasse un modèle prédéterminé de tampon lié au décodage.

6. Dispositif de codage de vidéo selon la revendication 5, dans lequel l'unité (109) de commande de quantification calcule la quantité de données cible correspondant à une image sur la base de la seconde valeur de détection fournie par la seconde unité de détection de quantité de données et corrige la quantité provisoire de données sorties sur la base de l'information de la quantité de données cible calculée correspondant à une image à un cycle prédéterminé à l'intérieur d'une plage de satisfaction du modèle de tampon.

7. Procédé de codage de vidéo comprenant les étapes :
de quantification de données vidéo d'entrée ;
de conversion des données vidéo quantifiées en séries de symboles binaires et de sortie des séries de symboles binaires de chaque image à une période prédéterminée ;
de soumission des séries de symboles binaires à un codage arithmétique de sorte que le temps de traitement du codage arithmétique varie en fonction de chaque image ;
de détection, en tant que première valeur de détection, de la quantité de données des séries de symboles binaires sorties à l'étape de conversion de binarisation pour chaque image ;
de détection, en tant que seconde valeur de détection, de la quantité de données des données codées sorties à l'étape de codage arithmétique pour chaque image ; et
de commande pour, au moment où la première étape de détection de quantité de données détecte la première valeur de détection en ce qui concerne une certaine image, estimer une quantité de données cible d'une image qui suit la certaine image sur la base de la première valeur de détection et pour déterminer un paramètre de quantification destiné à commander la quantification de l'image qui suit la certaine image en fonction de la quantité de données cible estimée, et pour, au moment où la seconde étape de détection de quantité de données détecte la seconde valeur de détection en ce qui concerne la certaine image, mettre à jour le paramètre de quantification en fonction de la seconde valeur de détection.

8. Procédé de codage de vidéo selon la revendication 7, dans lequel l'étape de commande inclut la détermination du paramètre de quantification pour un bloc d'image à l'intérieur de l'image sur la base de la quantité de données cible.

9. Procédé de codage de vidéo selon la revendication 8, dans lequel l'étape de commande de quantification inclut le changement, en se basant sur la seconde valeur de détection, du paramètre de quantification de chaque bloc d'image déterminé en se basant sur la quantité de données cible.

10. Procédé de codage de vidéo selon la revendication 7, dans lequel la commande de quantification inclut l'ajustement, sur la base de la seconde valeur de détection, de la quantité de données réelle engendrée de façon à l'augmenter.

11. Procédé de codage de vidéo selon la revendication 7, dans lequel l'étape de commande inclut le calcul de l'intégration de la première valeur de détection sortie à l'étape de détection de la quantité des données sorties à l'étape de conversion de binarisation, en tant que quantité provisoire de données engendrées et la mise en oeuvre de la commande de façon que la quantité provisoire de données engendrées pertinente satisfasse un modèle prédéterminé de tampon lié au décodage.

12. Procédé de codage de vidéo selon la revendication 11, dans lequel l'étape de commande inclut le calcul de la quantité de données cible correspondant à une image sur la base de la seconde valeur de détection à la seconde étape de détection de la quantité des données sorties à l'étape de soumission au codage arithmétique et la correction de la quantité provisoire de données sorties sur la base de l'information de la quantité de données cible calculée correspondant à une image à un cycle prédéterminé à l'intérieur d'une plage de satisfaction du modèle de tampon.

13. Support de mémorisation mémorisant un programme destiné à faire qu'un processeur mette en oeuvre un procédé de codage de vidéo, le procédé de codage de vidéo comprenant les étapes :
de quantification de données vidéo d'entrée ;
de conversion des données vidéo quantifiées en séries de symboles binaires et de sortie des séries de symboles binaires de chaque image à une période prédéterminée ;
de soumission des séries de symboles binaires à un codage arithmétique de sorte que le temps de traitement du codage arithmétique varie en fonction de chaque image ;
de détection, en tant que première valeur de détection, de la quantité de données des séries de symboles binaires sorties à l'étape de conversion de binarisation pour chaque image ;
de détection, en tant que seconde valeur de détection, de la quantité de données sorties à l'étape de codage arithmétique pour chaque image ; et
de commande pour, au moment où la première étape de détection de quantité de données détecte la première valeur de détection en ce qui concerne une certaine image, estimer une quantité de données cible d'une image qui suit la certaine image sur la base de la première valeur de détection et pour déterminer un paramètre de quantification destiné à commander la quantification de l'image qui suit la certaine image en fonction de la quantité de données cible estimée, et pour, au moment où la seconde étape de détection de quantité de données détecte la seconde valeur de détection en ce qui concerne la certaine image, mettre à jour le paramètre de quantification en fonction de la seconde valeur de détection.
